# EUROPEAN PATENT SPECIFICATION

(11) **EP 4 289 244 B1**
(45) Date of publication and mention of the grant of the patent: **24.09.2025**
(21) Application number: 23178368.9
(22) Date of filing: 09.06.2023
(51) Int. Cl.: A01B 76/00, A01B 69/00, A01B 49/02

(54) **AGRICULTURAL SYSTEM**
LANDWIRTSCHAFTLICHES SYSTEM
SYSTÈME AGRICOLE

(30) Priority: 08.06.2022 US 202217835586
(43) Date of publication of application: 13.12.2023
(73) Proprietor: Deere & Company, Moline, IL 61265 (US)
(72) Inventor: DEMSKI, Nathan R., 68163 Mannheim (DE); KEEN, Eric A., 68163 Mannheim (DE); POTTER, Benjamin C., 68163 Mannheim (DE); KLEIN, Mark D., 68163 Mannheim (DE)
(74) Representative: Reichert, Christian

(56) References cited:
- EP-A1- 3 119 177
- DE-A1- 102018 108 734
- US-A1- 2019 392 239
- US-A1- 2021 243 933
- US-A1- 2021 402 914
- US-A1- 2022 000 008

## Description

The present description relates to agricultural implements. More specifically the present description relates to illumination on towed agricultural implements.

### BACKGROUND

There are a wide variety of different types of agricultural implements. Many such implements are towed by a towing vehicle, such as a tractor. Such agricultural implements can include planters, air seeders, tillage implements, application equipment (such as fertilizer or other commodity application implements), and other implements.

Some agricultural implements are operated in suboptimal conditions. For instance, implements are operated in low light conditions, such as in the evening or other non-daylight hours.

As discussed above, there are many different types of towed agricultural implements that are towed by a towing vehicle, such as a tractor. As operators attempt to stretch the working window for crops in order to improve yields, some farming applications continue to be performed later into the evening. It can thus be difficult for an operator to see how the implement is operating in low light conditions.

Also, work is currently being done in an attempt to provide semi- autonomous or fully-autonomous control of the towing vehicle and agricultural implement. Such semi-autonomous and fully-autonomous operation may rely on optical sensors that are placed on the tools or implement. Such optical sensors often need even illumination in the working area of the tool bar which is being sensed. Thus, in low light conditions, optical sensors may operate with reduced accuracy.

While current agricultural vehicle setups (towing vehicle and towed implement) provide illumination devices that give excellent visibility to the front and the top of the implement, such illumination devices do not allow the operator to see well at night beyond the front portion of the tool. This can lead to difficulties. For example, a tillage implement may have a plurality of different ranks of tools. If the second or third rank of the tillage implement is plugged, the operator will not be able to see this in low light conditions until the operator performs an adjacent pass in the return direction. The operator then needs to exit the operator compartment of the towing vehicle and clean out the clogged rank of tools and then repeat the adjacent tillage pass. Similar issues can occur on finishing rolling basket tools on tillage implements, rear ranks on an air seeder, or shanks on an anhydrous fertilizer applicator, etc.

In the past, some operators have purchased bolt-on illumination devices and placed them on the implements. However, such devices still do not provide under-bar illumination that illuminates the tool-to-soil interface. Similarly, such illumination devices are manually actuated on the implement, and are not controllable from other locations. Also, there is limited power available from the alternator of the towing vehicle. Thus, additional illumination devices on the implement that are powered by the towing vehicle may undesirably load the power system on the towing vehicle.

WO 2015/139703 A1 describes a plow with two sets of lights for illumination of two groups of plow shears, which are switched on depending on which group of the shears are in operation.

US 2019/0392239 A1, considered as generic, describes a tillage implement with a number of lights that are directed towards different parts of the implement in order to provide illumination for a camera looking onto the field in front of the implement. A user interface with a touchscreen can be used to switch the lights (or groups thereof) on and off by the operator if needed.

US 2021/0402914 A1 describes a towing vehicle with a tillage implement with automatic control of lights assigned to parts of the implement depending on the operation conditions or identified problems of the implement.

US 2022/0000008 A1 shows a seeding machine with a camera looking into a seed furrow and an illumination for the furrow, with a light intensity based on quality of the camera image.

### SUMMARY

The present invention is defined by the claims.

An implement illumination system includes illumination devices that illuminate a tool-to-soil interaction area. The illumination devices may also be grouped into groups and may be controllable from the operator's compartment of the towing vehicle. The present description thus describes a system in which power may be provided not only from the towing vehicle, but from a power supply on the implement to a set of low voltage illumination devices that evenly illuminate the tool-to-soil interface of the implement. The illumination devices are grouped together and can be controlled individually or in groups from the operator compartment of the towing vehicle. The illumination devices may be placed on the implement to provide row-by-row illumination and rank-by-rank illumination so that the operator or optical sensors can clearly see the implement. An interface display is generated on the towing vehicle showing the operator where the illumination devices are located on the implement and the state (on/off) of each illumination device.

### BRIEF DESCRIPTION OF THE DRAWINGS

FIG. 1 is a pictorial view of a towing vehicle towing a tillage implement.
FIG. 2 is a side view of a tillage implement.
FIG. 3 is a side view of a towing vehicle towing a planter implement.
FIG. 4 is a top view of a planter implement with illumination devices.
FIG. 5 is a top view of one example of a towed planter implement showing the location of illumination device.
FIG. 6 is a block diagram of one example of a towed implement architecture.
FIG. 7 shows one example of a display that can be used to control illumination devices.
FIGS. 8, 9, and 10 shows a block diagram of one example of a mobile device that can be used in the architecture illustrated in FIG. 6.
FIG. 9 is a block diagram showing one example of a computing environment that can be used in the architectures described above.

### DETAILED DESCRIPTION

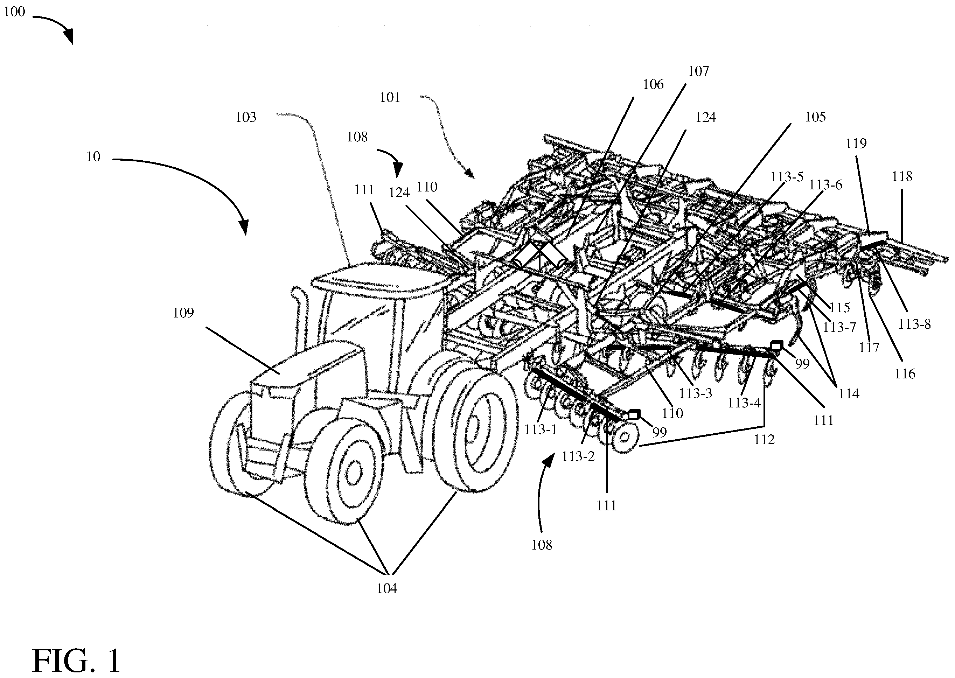

FIG. 1 is a view showing one example of a mobile agricultural system 100 that includes a towing vehicle 10, illustrated as a tractor, and a tillage implement 101. Towing vehicle 10 includes an operator compartment 103, which may have various operator input mechanisms, a propulsion subsystem 109, such as a powertrain (e.g., engine or motor, transmission, etc.), and a set of ground engaging elements 104, illustrated as wheels, but in other examples, could be tracks. Tillage implement 101, itself, includes a plurality of wheels 105 which support a frame 106 of a main section 107 above the field. Tillage implement 101 also includes a subframe 110 and a plurality of wing sections 108 which are coupled to main section 107. The wing sections 108 include tool frames 111, coupled to the subframe 110, and tillage tools 112 (shown as disks) coupled to the tool frames 111. The wing sections 108 are actuatable (and deployable) by respective actuators 124 which are controllable to change a position of wing sections 108 but are also controllable to apply a downforce to the wing sections 108 and thus the tools 112. Implement 101 can also include a variety of other tools which are coupled to the main frame 106 or the subframe 110 via respective tool frames. For example, implement 101 includes a plurality of tillage tools 114 (shown as ripper shanks) which are coupled to respective tool frames 115, a plurality of tillage tools 116 (shown as closing disks) which are coupled to respective tool frames 117, as well as a plurality of tillage tools 118 (shown as rolling or finishing baskets) coupled to respective tool frames 119.

FIG. 1 also shows that implement 101 has a plurality of illumination devices 113-1, 113-2, 113-3, 113-4, 113-5, 113-6, 113-7, 113-8. While illumination devices 113-1 to 113-8 are shown on only one side of implement 101 in FIG. 1, there are illustratively similar illumination devices on the other side of implement 101 as well, though they are not shown. Illumination device 113-1 to 113-8 can be low voltage light emitting diode (LED) or other devices. The illumination devices 113-1 to 113-8 can be powered by 12V power supplied by tractor 10 or power by 56V power (or other voltage) powered by a power supply on implement 101 or on tractor 10 or elsewhere.

In the example shown in FIG. 1, illumination devices 113-1 to 113-8 are connected to tool frames 111, subframe 110, frame 106 or other parts of implement 101. Illumination devices 113-1 to 113-8 are downwardly directed to illuminate the tool-to-soil interface so that an operator in compartment 103, or optical sensors, have better visibility to that area of the implement 101. In addition, implement 101 can have one or more manual switches 99 so the illumination devices 113-1 to 113-8 can be manually turned off and on, individually or in groups, using switches 99, from outside operator compartment 103. Also, in one example, tractor 10 includes an operator interface system so the operator can turn on and off illumination devices 113-1 to 113-8 from inside the operator compartment 103 of towing vehicle 10.

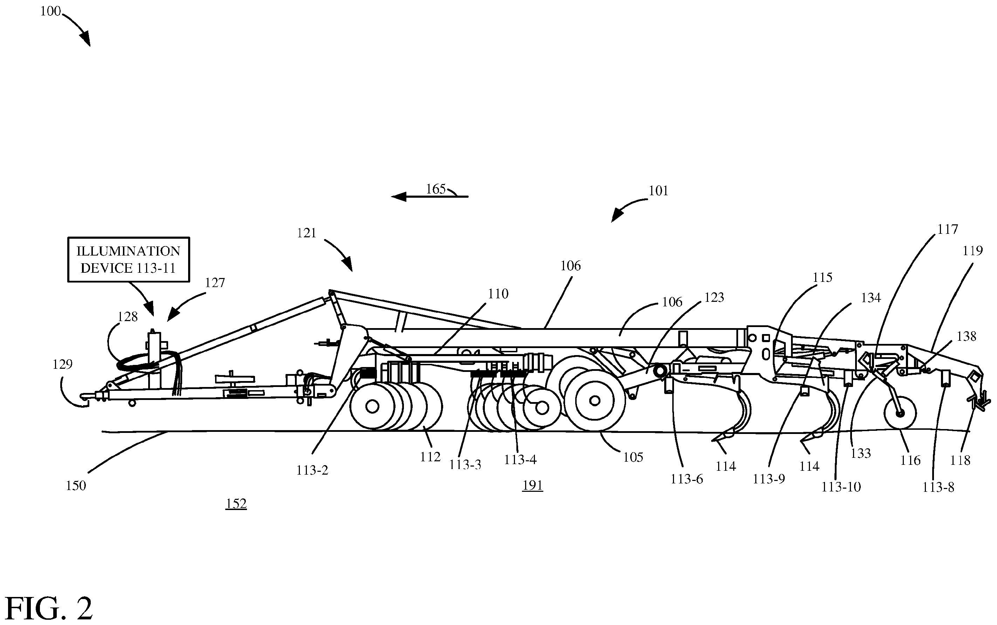

FIG. 2 is a perspective view showing tillage implement 101 in further detail. Those items that are also shown in FIG. 1 are similarly numbered in FIG. 2. FIG. 2 also shows additional illumination devices 113-9, 113-10, and 113-11, which are arranged to illuminate the tool-to-soil interface of tools 114 and 116 and the area around connection assembly 127, respectively. Illumination devices 113-9 to 113-11 can also be controlled using manual switches on implement 101 and/or from within the operator compartment of tractor 10.

Tillage implement 101 is towed by towing vehicle 10 in the direction indicated by arrow 165 and operates on a field 191 which has a surface 150 and subsurface 152. Tillage implement 101 includes a plurality of tools that can engage the surface 150 of the ground or penetrate the sub-surface 152 of the ground. Implement 101 may include a connection assembly 127 for coupling implement 101 to the towing vehicle 10. Connection assembly 127 includes a mechanical connection mechanism 129 (shown as a hitch) as well as a connection harness 128 which may include a plurality of different connection elements that provide, among other things, power, fluid (e.g., hydraulics or air, or both), as well as communication. In some examples, implement 101 may include its own power supply and fluid sources. The connection elements of connection harness 128 may form a conduit for delivering power supply and/or fluid to the various actuators on implement 101. Tractor 10 can also be connected to implement 101 by a power take-off, using a wired or wireless communication link, or another connection system.

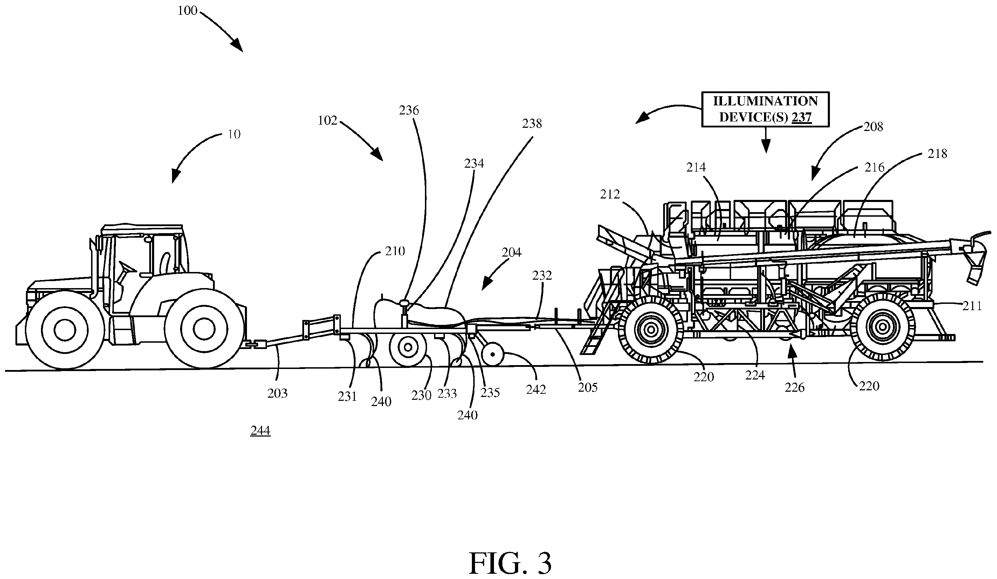

FIG. 3 is a side view of an example of an agricultural system 100 in which the agricultural implement, is an air or pneumatic seeder 102. In the example shown in FIG. 3, the seeder 102 comprises a tilling implement (or seeding tool) 204 (also sometimes called a drill) towed between a tractor (or other towing vehicle) 10 and a commodity cart (also sometimes called an air cart) 208. The commodity cart 208 has a frame 210 upon which a series of product tanks 212, 214, 216, and 218, and wheels 220 are mounted. A metering system 224 is provided at a lower end of each tank (a representative one of which is labeled) for controlled feeding or draining of product (most typically granular material) into a pneumatic distribution system 226. The tanks 212, 214, 216, and 218 can hold, for example, a material or commodity such as seed or fertilizer to be distributed to the soil. The tanks can be hoppers, bins, boxes, containers, etc. Furthermore, one tank with multiple compartments can also be provided instead of separated tanks.

The seeding tool 204 includes a frame 210 supported by ground wheels 230. Frame 210 is connected to a leading portion of the commodity cart 208, for example by a tongue style attachment or other coupling 205. Frame 210 is also coupled to towing vehicle 10 by coupling 203 which includes a communication link that can communicate illumination control signals to control illumination devices 231, 233, and 235 which ware downward facing illumination devices that illuminate the tool-to-soil interface between tools on implement 204 and the soil on field 244. Coupling 203 can also carry control signals to control illumination devices 237. Illumination devices 237 can be devices that illuminate areas of cart 208 (such as inside tanks 212-218, outside the tanks, the areas proximate coupling 203, maintenance areas on implement 102, etc.). Implement 102 can also include manual switches (like switches 99 in FIG. 1) that can be mounted to the frame or other locations on implement 102 and manually actuated to turn on and off illumination devices 231, 233, 235 and 237 individually and/or in groups. The commodity cart 208 is shown in what is called a "tow behind cart," meaning that the cart 208 follows the tilling implement (or seeding tool) 204. In an alternative arrangement, the cart 208 can be configured as a "tow between cart," meaning the cart 208 is between the tractor 10 and tilling implement (or seeding tool) 204. In yet a further possible arrangement, the commodity cart 208 and tilling implement (or seeding tool) 204 can be combined to form a unified rather than separated configuration. These are just examples of additional possible implement configurations. Other implement configurations are even possible and all configurations should be considered contemplated and within the scope of the present description.

The couplings 203 and 205 can be mechanical, hydraulic, pneumatic, and electrical couplings, and/or other couplings. The coupling 203 can support communication and control signals between items on implement 102 and tractor 10. Coupling 205 can support communication and control signals as well. The couplings 203 and 205 can include wired and/or wireless couplings as well.

The pneumatic distribution system 226 includes a fan (not shown) connected to a product delivery conduit structure having multiple product flow passages 232. The fan directs air through the flow passages 232. Each product metering system 224 controls delivery of product from its associated tank at a controllable rate to the transporting airstreams moving through flow passages 232. In this manner, each flow passage 232 carries product from the tanks to a secondary distribution tower 234 on the tilling implement 204. Typically, there will be one tower 234 for each flow passage 234. Each tower 234 includes a secondary distributing manifold 236, typically located at the top of a vertical tube. The distributing manifold 236 divides the flow of product into a number of secondary distribution lines 238. Each secondary distribution line 238 delivers product to one of a plurality of ground engaging tools 240 (also known as ground openers) that define the locations of work points on tillage implement (or seeding tool) 204. The ground engaging tools 240 open a furrow in the soil 244 and facilitate deposit of the product therein. The number of flow passages 232 that feed into secondary distribution may vary from one to eight or ten or more, depending at least upon the configuration of the commodity cart 208 and tilling implement (or seeding tool) 204. Depending upon the cart and implement, there may be two distribution manifolds 236 in the air stream between the meters 224 and the ground engaging tools 240. Alternatively, in some configurations, the product is metered directly from the tank or tanks into secondary distribution lines that lead to the ground engaging tools 240 without any need for an intermediate distribution manifold. The product metering system 224 can be configured to vary the rate of delivery of seed to each work point on tool 204 or to different sets or zones of work points on tool 204. The configurations described herein are only examples. Other configurations are possible and should be considered contemplated and within the scope of the present description.

A firming or closing wheel 242 associated with each ground engaging tool 240 trails the tool and firms the soil over the product deposited in the soil. In practice, a variety of different types of tools 240 are used including, but not necessarily limited to, tines, shanks and disks. The tools 240 are typically moveable between a lowered position engaging the ground and a raised position riding above the ground. Each individual tool 240 may be configured to be raised by a separate actuator. Alternatively, multiple tools 240 may be mounted to a common component for movement together. In yet another alternative, the tools 240 may be fixed to the frame 228, the frame being configured to be raised and lowered with the tools 240.

Examples of air or pneumatic seeder 202 described above should not be considered limiting. The features described in the present description can be applied to any seeder configuration, or other material application machine, whether specifically described herein or not.

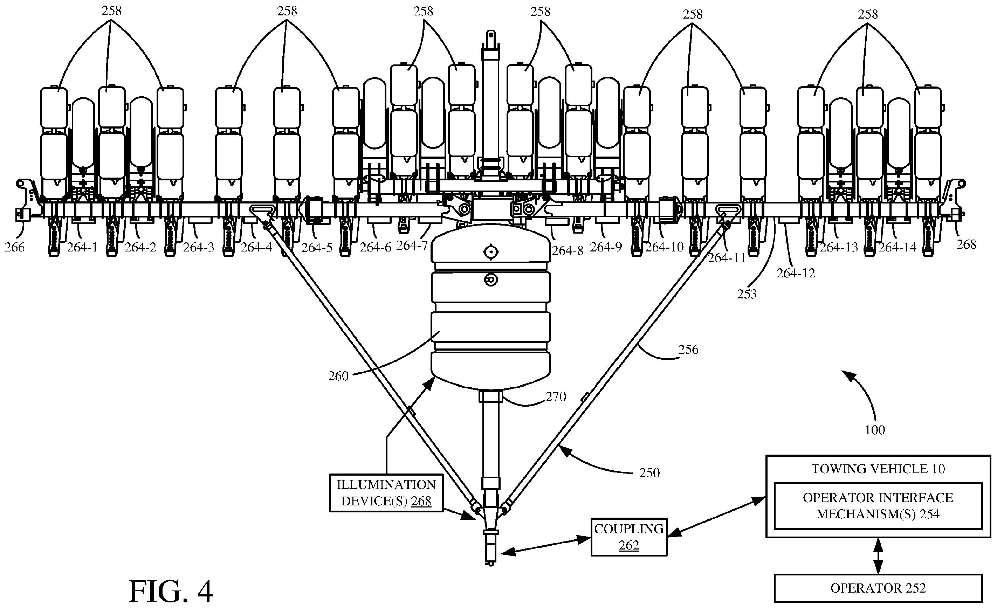

FIG. 4 is a partial pictorial, partial schematic top view of one example of an agricultural system 100 that includes agricultural implement (planting machine) 250, and towing vehicle 10, that is operated by operator 252. Operator 252 can illustratively interact with operator interface mechanisms 254 to manipulate and control vehicle 10 and some or all portions of implement 250.

Implement 250 is a row crop planting machine that illustratively includes a toolbar 253 that is part of a frame 256. FIG. 4 also shows that a plurality of planting row units 258 are mounted to the toolbar 253. Implement 250 can be towed behind a towing vehicle 10, such as a tractor. FIG. 4 shows that material can be stored in a tank 260 and pumped through a supply line so the material can be dispensed by row units 258 in or near the rows being planted.

FIG. 4 also shows that the towing vehicle 10 is coupled to implement 250 by coupling 262. Coupling 262, like coupling 203 described above, includes a communication link that can communicate illumination control signals to control illumination devices 264-1, 264-2, 264-3, 264-4, 264-5, 264-6, 264-7, 264-8, 264-9, 264-10, 264-11, 264-12, 264-13, and 264-14 which are downward facing illumination devices that illuminate the tool-to-soil interface between tools on the row units 258 of implement 250 and the soil on the field over which implement 250 is traveling. FIG. 4 also shows that implement 250 can have additional illumination devices 268 which illuminate other areas of implement 250 (such as the area proximate coupling 262, inside and/or outside tank 260, and other areas of row unit 258). The illumination devices 264-1 to 264-14 and the additional illumination devices 268 may be controllable alone or, in groups, from within the operator compartment of towing vehicle 10. Also, in one example, implement 250 may have manual switches 266, 268, and 270 which can be manually actuated by operator 252 to turn on or off illumination devices 264-1 to 264-14, and 268 individually or in groups.

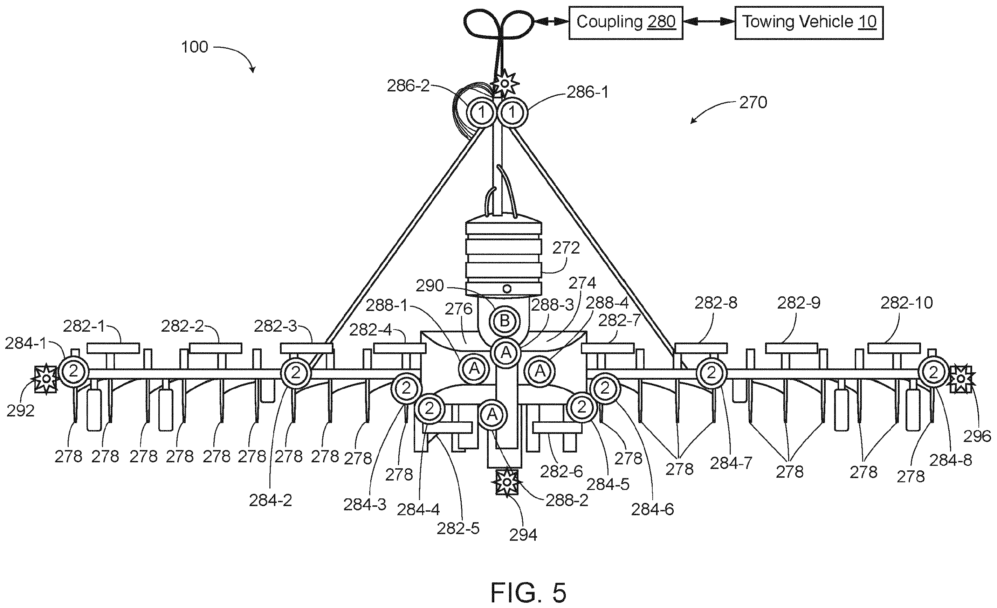

FIG. 5 is a top view of another example of an agricultural system 100 in which implement 270 includes a planter. Implement 270 includes a set of tanks 272, 274, and 276, as well as tools 278 which engage the soil over which implement 270 is traveling. Towing vehicle 10 is connected to implement 270 over coupling 280. As with the couplings described above, coupling 280 can include an electrical link, a power transmitting link (such as a power takeoff, a pneumatic or hydraulic link, or other power transmitting link, a mechanical link, as well as a wired or wireless communication link which provides communication between certain parts of implement 270 and towing vehicle 10. Material from tanks 272-276 is provided through a set of conduits to tools 278 where the material is applied to the soil. The material can include seeds, fertilizer, and other materials. In the example shown in FIG. 5, implement 270 includes a set of downward facing illumination devices 282-1, 282-2, 282-3, 282-4, 282-5, 282-6, 282-7, 282-8, 282-9, and 282-10. The downward facing illumination devices 282-1 to 282-10 direct light to the tool-to-soil interface between tools 278 and the soil over which implement 270 is traveling. Implement 270 is also shown with another set of lights 284-1, 284-2, 284-3, 284-4, 284-5, 284-6, 284-7, and 284-8. Illumination devices 284-1 to 284-8 may include lights that are driven off of a different power supply (such as a 56V power supply). Illumination devices 284-1 to 284-8 may provide additional illumination either on the ground or to illuminate various other portions of implement 270. Similarly, implement 270 can include a set of illumination devices 286-1 to 286-2 which illuminate the area of implement 270 proximate coupling 280. In addition, implement 270 can have a set of illumination devices 288-1, 288-2, 288, 3, and 288-4. Illumination devices 288-1 to 288-4 may include in-tank lights and service lights that provide illumination to various portions of implement 270, such as inside tanks 274 and 276, and to service areas of implement 270. Similarly, illumination device 290 may also be an in-tank illumination device that illuminates the interior of tank 272. The illumination devices on implement 270 may be 12V devices, 56V devices, or a wide variety of other devices. They may be LED devices or other devices.

Also, in the example shown in FIG. 5, implement 270 has a plurality of different manual switches 292, 294, and 296. Manual switches 292, 294, and 296 may be manually actuated by an operator to turn on and off the illumination devices on implement 270 either individually or in groups. Thus, some or all of the illumination devices on implement 270 can be actuated both manually using switches 292, 294, and 296 and remotely from the operator compartment of towing vehicle 10, or elsewhere.

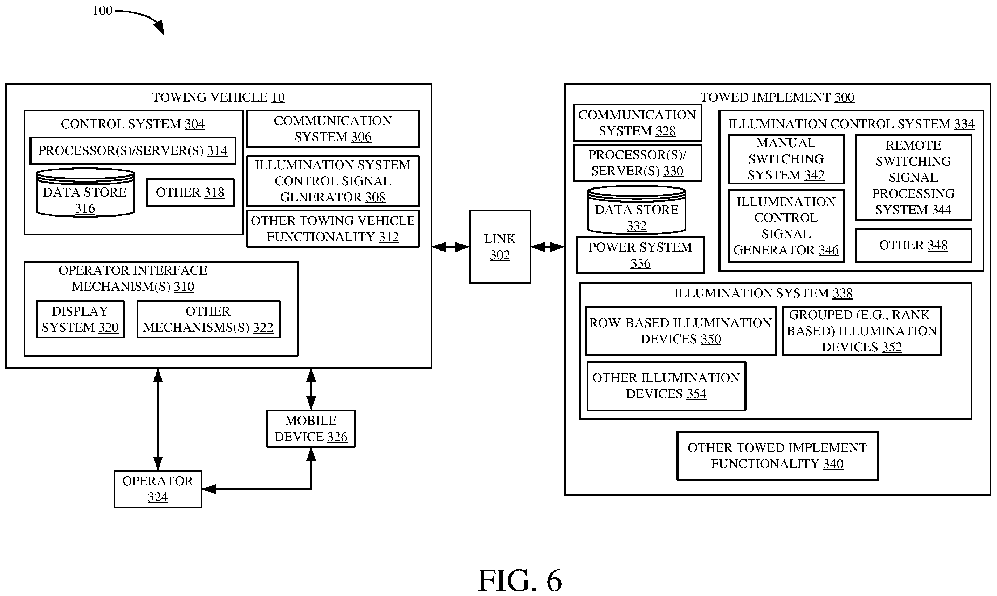

FIG. 6 is a block diagram showing one example of agricultural system 100 in more detail. In the example shown in FIG. 6, towing vehicle 10 is tractor and is shown coupled to a towed implement 300 by link 302.

In the example shown in FIG. 6, towing vehicle 10 includes control system 304, communication system 306, illumination system control signal generator 308, operator interface mechanisms 310, and other towing vehicle functionality 312. Control system 304 can include one or more processors or servers 314, data store 316, and other items 318. Operator interface mechanisms 310 can include a display system 320, and other mechanisms 322. Operator 324 can control and manipulate towing vehicle 10 through operator interface mechanisms 310 and/or through a mobile device 326 which may be mounted in the operator compartment of towing vehicle 10, a mobile device carried by operator 324, or a mobile device otherwise incorporated into agricultural system 100. Towed implement 300 includes communication system 328, one or more processors or servers 330, data store 332, illumination control system 334, power system 336, illumination system 338, and other towed implement functionality 340. Illumination control system 334 can include manual switching system 342, remote switching signal processing system 344, illumination control signal generator 346, and other items 348. Illumination system 338 can include row-based illumination devices 350, grouped (e.g., rank-based) illumination devices 352, and other illumination devices 354. In one example, operator 324 can provide control signals either directly through operator interface mechanisms 310, through mobile device 326, or otherwise, to control illumination devices 350, 352, and 354 on towed implement 300. The operator inputs may be provided to illumination system control signal generator 308 that generates control signals to control the illumination devices in illumination system 338 based on the operator inputs. Communication system 306 can then communicate those signals to communication system 328 on towed implement 300 over link 302. Link 302 can thus provide electrical power, mechanical power, and communication signals (either through wired or wireless links) between towing vehicle 10 and towed implement 300. Link 302 can include a controller area network (CAN) link or other link as well.

Once communication system 328 receives the illumination control signals, those signals can be provided to illumination control system 334. Remote switching signal processing system 344 receives the signals and processes those signals to provide outputs to illumination control signal generator 346 which generates control signals to control the illumination devices in illumination system 338 based upon the operator inputs from operator 324. The control signals can be to turn the illumination devices on or off individually or in groups or in other ways. Row-based illumination devices 350 are illustratively downwardly directed illumination devices that illuminate the tool-to-soil interface on towed implement 300. Some examples of such illumination devices are described above. Grouped illumination devices 352 are illumination devices that can be turned on or off in groups. For instance, the illumination devices may be grouped into one group that provides illumination to the tool-to-soil interface, another group that provides rearward illumination illuminating the ground rearward of implement 300, maintenance illumination devices that provide illumination in areas that may require maintenance on towed implement 300, forward illumination devices that provide illumination forward of implement 300, or other groups. In one example the grouped illumination devices 352 are grouped by tool bar, by tool group (e.g., by rank of tillage tools in a tillage implement), or other groups of illumination devices.

It will also be noted that, in one example, power for illumination system 338 can be provided from towing vehicle 10 over link 302. In another example, the power can be provided by an on-board power system 336 (e.g., a power supply) that is self-contained on towed implement 300. In yet another example, power can be provided by from towing vehicle 10 over link 302 and by an on-board power system 336.

Also, in one example, the manual switching system 342 can include manual switches mounted on towed implement 300 that can be used to manually turn on or off the illumination devices in illumination system 338 either individually or in groups. The manual switches can be mounted on areas of the towed implement 300 in areas that are easily accessible by operator 324 after operator 324 exists the operator compartment of towing vehicle 10.

The operator 324 can control the illumination devices in illumination system 338 remotely through operator interface mechanism(s) 310. For example, display system 320 can generate a user interactive display that operator 324 can interact with in order to control the illumination devices on towed implement 300. The user interface display can display a representation of towed implement 300 showing the location of the illumination devices on towed implement 300 and showing how those illumination devices are grouped so that the illumination devices can easily be turned on or off by operator 324 either individually or in groups. The display may be a touch sensitive display where actuators are displayed on the display and can be actuated using touch gestures. In another example, the actuators displayed on the display can be actuated using a point and click device, or using voice gestures (such as where operator interface system 310 includes speech recognition functionality).

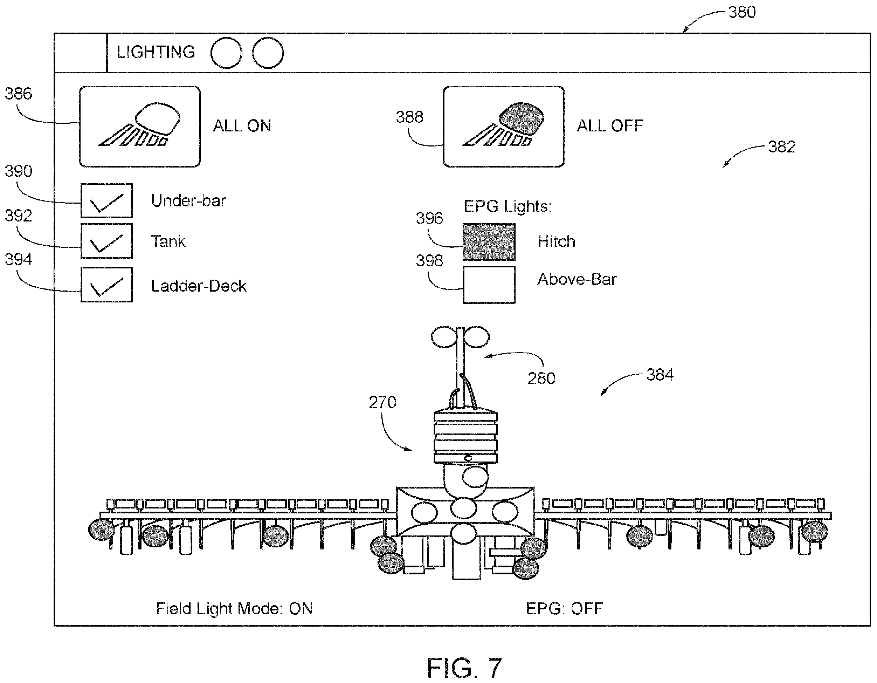

FIG. 7 shows one example of a user interface display 380 that can be generated by display system 320 in order to allow operator 324 to control the illumination devices on illumination system 338. In the example shown in FIG. 7, display 380 has a control section 382 and a location display section 384. Section 384 shows where the illumination devices are located on an implement. In the example shown in FIG. 7, the implement is implement 270, as described above with respect to FIG. 5. Therefore, the illumination devices are similar to those illustrated in FIG. 7.

In the example shown in FIG. 7, the control section 382 of display 380 includes an "All On" actuator 386 and an "All Off" actuator 388. The operator can actuate actuator 386 to turn on all illumination devices on implement 270. The operator can actuate actuator 388 to turn off all of the illumination devices on implement 270. Also, in the example shown in FIG. 7, the display 380 shows that the illumination devices are visually grouped to show that the illumination devices in each group can be controlled together. The first group is a group of the downwardly directed illumination devices that illuminate the tool-soil interface (e.g., illumination devices 284-1 to 284-10 shown in FIG. 5). A second group of illumination devices includes the tank illumination devices 288-1 to 288-4, and 290 (also numbered in FIG. 5), and a third group of illumination devices includes the maintenance illumination devices such as devices 284-1 to 284-8. Also, another group of illumination devices includes illumination devices 286-1 to 286-2 which illuminate implement 270 in the area of the coupling 280. Yet another group of illumination devices may be illumination devices that illuminate portions of implement 270 which may require maintenance or other portions referred to herein as above-bar illumination devices. Therefore, in the example shown in FIG. 7, actuator 390 can be actuated to turn on the illumination devices that illuminate the tool-to-soil interface while actuator 392 can be actuated to turn on the in-tank illumination devices and actuator 394 can be actuated to turn on the maintenance illumination devices. Similarly, actuator 396 can be actuated to turn on the actuators that illuminate the hitch region of implement 270, and actuator 398 can be actuated to turn on or off other illumination devices on implement 270.

In the example shown in FIG. 7, display 380 is displayed on a touch sensitive display screen. Therefore, all of the actuators can be actuated by simply touching them on display 380. In another example, the actuators can be overlayed on the representation 384 of implement 270 so that the operator can touch those actuators on the representation of implement 270 in order to turn them on or off. FIG. 7 also shows that the representations of the actuators in display portion 384 can indicate whether the illumination devices are on or off. For instance, if the illumination devices displayed on display 380 are filled in with a black or other color, this may indicate that the corresponding illumination devices are off, while if they are filled in with a white or different color this may indicate that the corresponding illumination devices are on. The display 380 can take a wide variety of other forms as well in which the operator can turn on or off illumination devices individually or in groups from the operator compartment of the towing vehicle 10.

It can thus be seen that the present description provides a system in which downwardly-directed illumination devices provide uniform illumination of the tool-to-soil interface of a towed implement. This allows an operator to easily see that interface and it also allows optical sensors to perform at a high level of accuracy. Similarly, illumination devices are provided which illuminate other portions of a towed implement so that the operator can easily observe the implement in those areas and so that optical sensors that sense those areas can operate accurately as well. Similarly, one example of the present description describes a system in which the illumination devices can be turned on individually or in groups from the operator compartment of the towing vehicle, and can also be turned on individually or in groups manually from switches mounted on the implement. A display can be generated that easily allows the operator to control the illumination devices and that shows the location of the illumination devices on the implement, how the illumination devices are grouped, and the state of each of the illumination devices (e.g., off or on, etc.). These are just some examples.

The present discussion has mentioned processors and servers. In one example, the processors and servers include computer processors with associated memory and timing circuitry, not separately shown. The processors and servers are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays them has speech recognition components, the mechanisms can be actuated using speech commands.

A number of data stores have also been discussed. It will be noted they can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components and/or logic. It will be appreciated that such systems, components and/or logic can be comprised of hardware items (such as processors and associated memory, or other processing components, some of which are described below) that perform the functions associated with those systems, components and/or logic. In addition, the systems, components and/or logic can be comprised of software that is loaded into a memory and is subsequently executed by a processor or server, or other computing component, as described below. The systems, components and/or logic can also be comprised of different combinations of hardware, software, firmware, etc., some examples of which are described below. These are only some examples of different structures that can be used to form the systems, components and/or logic described above. Other structures can be used as well.

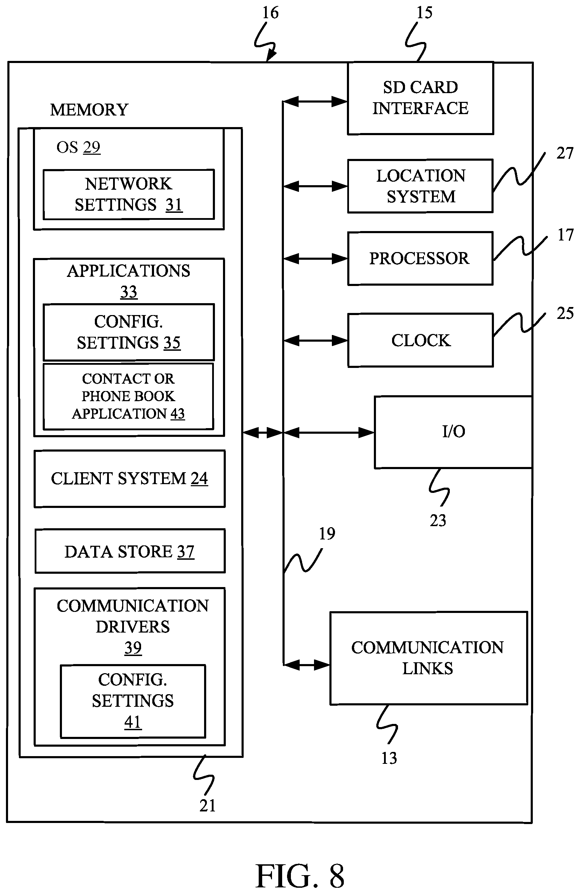

FIG. 8 is a simplified block diagram of one illustrative example of a handheld or mobile computing device that can be used as a user's or client's hand held device 16, in which the present system (or parts of it) can be deployed. For instance, a mobile device can be deployed in the operator compartment of towing vehicle 10 or as mobile device 326 in FIG. 6 for use in generating, processing, or displaying the control signals, user interface displays, etc.

FIG. 8 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well. Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. It can also include, for example, mapping software or navigation software that generates desired maps, navigation routes and other geographic functions. Memory 21 stores operating system 29, network settings 31, applications 33, application configuration settings 35, data store 37, communication drivers 39, and communication configuration settings 41. Memory 21 can include all types of tangible volatile and nonvolatile computer-readable memory devices. It can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

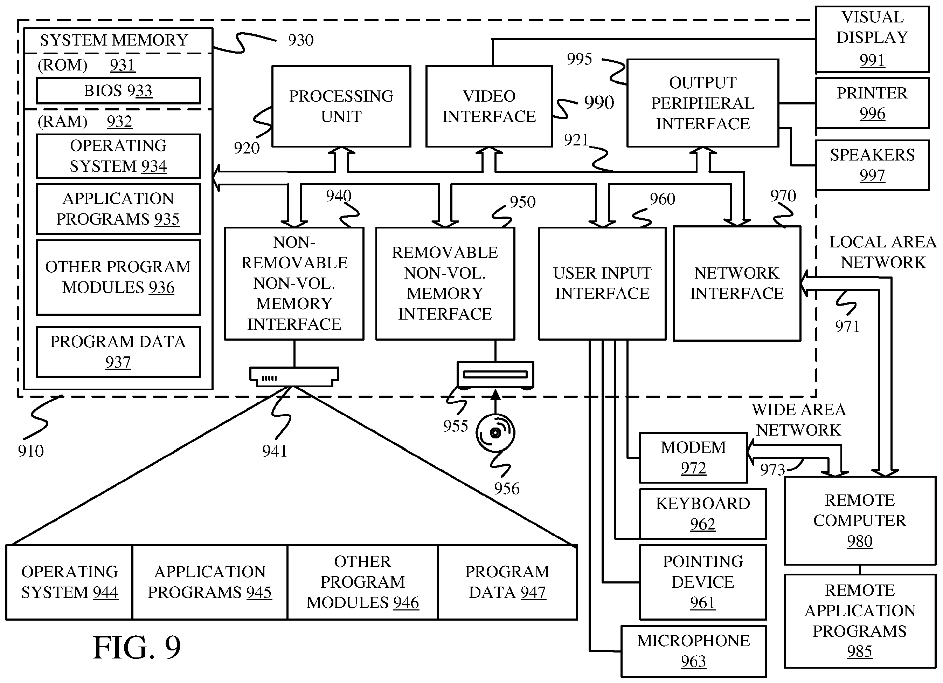

FIG. 9 is one example of a computing environment in which elements of previous FIGS., or parts of it, (for example) can be deployed. With reference to FIG. 9, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 9.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. It includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 9 illustrates operating system 834, application programs 835, other program modules 836, and program data 837.

The computer 810 may also include other removable/non-removable volatile/nonvolatile computer storage media. By way of example only, FIG. 9 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 9, provide storage of computer readable instructions, data structures, program modules and other data for the computer 810. In FIG. 9, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 9 illustrates, for example, that remote application programs 885 can reside on remote computer 880.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural system (100), comprising:
a towable implement (101, 204, 250, 270, 300) having a frame (106, 107, 108, 110, 111, 210) and a set of ground engaging tools (112, 230, 240, 242, 278), mounted to the frame (106, 107, 108, 110, 111, 210), the set of ground engaging tools (112, 230, 240, 242, 278) configured to engage the ground at a tool-to-soil interface;
a towing vehicle (10) to which the towable implement is coupled;
an illumination device (113, 231, 233, 235, 264, 282, 338, 350, 352, 354), mounted to the frame (106, 107, 108, 110, 111, 210), oriented to direct illumination to the tool-to-soil interface; wherein the illumination device (113, 231, 233, 235, 264, 282, 338, 350, 352, 354) comprises a plurality of illumination devices (113, 231, 233, 235, 264, 282, 338, 350, 352, 354);
a communication link (302) coupled to the towable agricultural implement (101, 204, 250, 270, 300) and configured to receive illumination device control signals from the towing vehicle (10) to control a state of the illumination device (113, 231, 233, 235, 264, 282, 338, 350, 352, 354) based on an operator input;
the towing vehicle comprising:
an operator interface mechanism (254, 310) configured to receive the operator input to control the illumination device (113, 231, 233, 235, 264, 282, 338, 350, 352, 354);
a communication system (306) configured to communicate an illumination device control signal to the towed agricultural implement (101, 204, 250, 270, 300) based on the operator input;
wherein the operator interface mechanism (254, 310) comprises a display system (320, 380) configured to generate a display with an operator actuatable display element, the display system (320, 380) being configured to detect, as the operator input, operator actuation of the operator actuatable display element;
**characterized in that** the display system (320, 380) is configured to generate the display comprising:
an implement display portion (384) that displays a representation of the towed agricultural implement (101, 204, 250, 270, 300);
an illumination device representation (382) of the plurality of illumination devices (113, 231, 233, 235, 264, 282, 338, 350, 352, 354) on the representation of the towed agricultural implement (101, 204, 250, 270, 300);
and a plurality of illumination actuators (386, 388, 390, 392, 394, 396, 398), each illumination actuator being actuated to control a different subset of the plurality of illumination devices (113, 231, 233, 235, 264, 282, 338, 350, 352, 354).

2. The agricultural system (100) of claim 1 wherein the set of ground engaging tools (112, 230, 240, 242, 278) are grouped into groups and wherein a different subset of the plurality of illumination devices (350, 352, 354) being configured to illuminate the tool-to-soil interface of a different group of the ground engaging tools (112, 230, 240, 242, 278).

3. The agricultural system (100) of claim 2 wherein each different subset of the plurality of illumination devices (113, 231, 233, 235, 264, 282, 338, 350, 352, 354) is controllable independently of other subsets of the plurality of illumination devices (113, 231, 233, 235, 264, 282, 338, 350, 352, 354) based on the operator input.

4. The agricultural system (100) of claim 1 and further comprising a manual switch (99, 266, 268, 270, 342) coupled to the frame (106, 107, 108, 110, 111, 210) and configured to control the illumination device (113, 231, 233, 235, 264, 282, 338, 350, 352, 354) based on a manual input.

5. The agricultural system (100) of one of the claims 1 to 4, and further comprising a power supply (336) mounted on the implement (101, 204, 250, 270, 300) and configured to power the plurality of illumination devices (113, 231, 233, 235, 264, 282, 338, 350, 352, 354).

6. An agricultural system (100) of one of the claims 1 to 5, further comprising:
the towing vehicle (10) including an operator compartment (103) and the operator interface mechanism (254, 310) in the operator compartment (103);
wherein the communication link (302) coupled to the towing vehicle (10) and the towed agricultural implement (101, 204, 250, 270, 300) and configured to receive illumination device control signals from the towing vehicle (10) to control a state of the illumination device based on an operator input through the operator interface mechanism (254, 310).

## Patentansprüche

1. Landwirtschaftliches System (100), das Folgendes umfasst:
ein schleppbares Arbeitsgerät (101, 204, 250, 270, 300) mit einem Rahmen (106, 107, 108, 110, 111, 210) und einem Satz Bodeneingriffswerkzeugen (112, 230, 240, 242, 278), die an dem Rahmen (106, 107, 108, 110, 111, 210) montiert sind, wobei der Satz Bodeneingriffswerkzeuge (112, 230, 240, 242, 278) dazu ausgelegt ist, an einer Werkzeug-Boden-Schnittstelle in den Boden einzugreifen;
ein Schleppfahrzeug (10), an welches das schleppbare Arbeitsgerät gekoppelt ist;
eine Beleuchtungsvorrichtung (113, 231, 233, 235, 264, 282, 338, 350, 352, 354), die an dem Rahmen (106, 107, 108, 110, 111, 210) montiert und dazu orientiert ist, eine Beleuchtung auf die Werkzeug-Boden-Schnittstelle zu richten; wobei die Beleuchtungsvorrichtung (113, 231, 233, 235, 264, 282, 338, 350, 352, 354) mehrere Beleuchtungsvorrichtungen (113, 231, 233, 235, 264, 282, 338, 350, 352, 354) umfasst;
eine Kommunikationsverbindung (302), die mit dem schleppbaren landwirtschaftlichen Arbeitsgerät (101, 204, 250, 270, 300) gekoppelt und dazu ausgelegt ist, Beleuchtungsvorrichtungssteuersignale vom Schleppfahrzeug (10) zu empfangen, um den Zustand der Beleuchtungsvorrichtung (113, 231, 233, 235, 264, 282, 338, 350, 352, 354) basierend auf einer Bedienereingabe zu steuern;
wobei das Schleppfahrzeug Folgendes umfasst:
einen Bedieneroberflächenmechanismus (254, 310), der dazu ausgelegt ist, die Bedienereingabe zum Steuern der Beleuchtungsvorrichtung (113, 231, 233, 235, 264, 282, 338, 350, 352, 354) zu empfangen;
ein Kommunikationssystem (306), das dazu ausgelegt ist, ein Beleuchtungsvorrichtungssteuersignal basierend auf der Bedienereingabe an das geschleppte landwirtschaftliche Arbeitsgerät (101, 204, 250, 270, 300) zu übermitteln;
wobei der Bedieneroberflächenmechanismus (254, 310) ein Anzeigesystem (320, 380) umfasst, das dazu ausgelegt ist, eine Anzeige mit einem vom Bediener betätigbaren Anzeigeelement zu erzeugen, wobei das Anzeigesystem (320, 380) dazu ausgelegt ist, die Bedienerbetätigung des vom Bediener betätigbaren Anzeigeelements als Bedienereingabe zu erfassen;
**dadurch gekennzeichnet, dass** das Anzeigesystem (320, 380) dazu ausgelegt ist, die Anzeige zu erzeugen, die Folgendes umfasst:
einen Arbeitsgeräteanzeigeabschnitt (384), der eine Darstellung des geschleppten landwirtschaftlichen Arbeitsgeräts (101, 204, 250, 270, 300) anzeigt;
eine Beleuchtungsvorrichtungsdarstellung (382) der mehreren Beleuchtungsvorrichtungen (113, 231, 233, 235, 264, 282, 338, 350, 352, 354) auf der Darstellung des geschleppten landwirtschaftlichen Arbeitsgeräts (101, 204, 250, 270, 300)
und mehrere Beleuchtungsstellglieder (386, 388, 390, 392, 394, 396, 398), wobei jedes Beleuchtungsstellglied betätigt wird, um einen anderen Teilsatz der mehreren Beleuchtungsvorrichtungen (113, 231, 233, 235, 264, 282, 338, 350, 352, 354) zu steuern.

2. Landwirtschaftliches System (100) nach Anspruch 1, wobei der Satz Bodeneingriffswerkzeuge (112, 230, 240, 242, 278) in Gruppen gruppiert ist und wobei ein anderer Teilsatz der mehreren Beleuchtungsvorrichtungen (350, 352, 354) dazu ausgelegt ist, die Werkzeug-Boden-Schnittstelle einer anderen Gruppe der Bodeneingriffswerkzeuge (112, 230, 240, 242, 278) zu beleuchten.

3. Landwirtschaftliches System (100) nach Anspruch 2, wobei jeder andere Teilsatz der mehreren Beleuchtungsvorrichtungen (113, 231, 233, 235, 264, 282, 338, 350, 352, 354) basierend auf der Bedienereingabe unabhängig von anderen Teilsätzen der mehreren Beleuchtungsvorrichtungen (113, 231, 233, 235, 264, 282, 338, 350, 352, 354) steuerbar ist.

4. Landwirtschaftliches System (100) nach Anspruch 1 und ferner umfassend einen manuellen Schalter (99, 266, 268, 270, 342), der mit dem Rahmen (106, 107, 108, 110, 111, 210) gekoppelt und dazu ausgelegt ist, die Beleuchtungsvorrichtung (113, 231, 233, 235, 264, 282, 338, 350, 352, 354) basierend auf einer manuellen Eingabe zu steuern.

5. Landwirtschaftliches System (100) nach einem der Ansprüche 1 bis 4 und ferner umfassend eine Energieversorgung (336), die an dem Arbeitsgerät (101, 204, 250, 270, 300) montiert und dazu ausgelegt ist, die mehreren Beleuchtungsvorrichtungen (113, 231, 233, 235, 264, 282, 338, 350, 352, 354) mit Energie zu versorgen.

6. Landwirtschaftliches System (100) nach einem der Ansprüche 1 bis 5, ferner umfassend:
dass das Schleppfahrzeug (10) eine Bedienerkabine (103) und den Bedieneroberflächenmechanismus (254, 310) in der Bedienerkabine (103) umfasst;
wobei die Kommunikationsverbindung (302) mit dem Schleppfahrzeug (10) und dem geschleppten landwirtschaftlichen Arbeitsgerät (101, 204, 250, 270, 300) gekoppelt und dazu ausgelegt ist, Beleuchtungsvorrichtungssteuersignale vom Schleppfahrzeug (10) zu empfangen, um den Zustand der Beleuchtungsvorrichtung basierend auf einer Bedienereingabe durch den Bedieneroberflächenmechanismus (254, 310) zu steuern.

## Revendications

1. Système agricole (100), comprenant :
un instrument pouvant être tracté (101, 204, 250, 270, 300) comportant un châssis (106, 107, 108, 110, 111, 210) et un ensemble d'outils venant en prise avec le sol (112, 230, 240, 242, 278), monté sur le châssis (106, 107, 108, 110, 111, 210), l'ensemble d'outils venant en prise avec le sol (112, 230, 240, 242, 278) étant conçu pour venir en prise avec le sol au niveau d'une interface outil-sol ;
un véhicule tracteur (10) auquel l'instrument pouvant être tracté est accouplé ;
un dispositif d'éclairage (113, 231, 233, 235, 264, 282, 338, 350, 352, 354), monté sur le châssis (106, 107, 108, 110, 111, 210), orienté de sorte à diriger l'éclairage directement sur l'interface outil-sol ; le dispositif d'éclairage (113, 231, 233, 235, 264, 282, 338, 350, 352, 354) comprenant une pluralité de dispositifs d'éclairage (113, 231, 233, 235, 264, 282, 338, 350, 352, 354) ;
une liaison de communication (302) accouplée à l'instrument agricole pouvant être tracté (101, 204, 250, 270, 300) et conçue pour recevoir des signaux de commande de dispositif d'éclairage provenant du véhicule tracteur (10) pour commander un état du dispositif d'éclairage (113, 231, 233, 235, 264, 282, 338, 350, 352, 354) en fonction d'une entrée opérateur ;
le véhicule tracteur comprenant :
un mécanisme d'interface opérateur (254, 310) conçu pour recevoir l'entrée opérateur pour commander le dispositif d'éclairage (113, 231, 233, 235, 264, 282, 338, 350, 352, 354) ;
un système de communication (306) conçu pour communiquer un signal de commande de dispositif d'éclairage à l'instrument agricole tracté (101, 204, 250, 270, 300) en fonction de l'entrée opérateur ;
le mécanisme d'interface opérateur (254, 310) comprenant un système d'affichage (320, 380) conçu pour générer un affichage avec un élément d'affichage actionnable par l'opérateur, le système d'affichage (320, 380) étant conçu pour détecter, en tant qu'entrée opérateur, l'actionnement par l'opérateur de l'élément d'affichage actionnable par l'opérateur ;
**caractérisé en ce que** le système d'affichage (320, 380) est conçu pour générer l'affichage comprenant :
une partie d'affichage d'instrument (384) qui affiche une représentation de l'instrument agricole tracté (101, 204, 250, 270, 300) ;
une représentation de dispositif d'éclairage (382) de la pluralité de dispositifs d'éclairage (113, 231, 233, 235, 264, 282, 338, 350, 352, 354) sur la représentation de l'instrument agricole tracté (101, 204, 250, 270, 300) ;
et une pluralité d'actionneurs d'éclairage (386, 388, 390, 392, 394, 396, 398), chaque actionneur d'éclairage étant actionné pour commander un sous-ensemble différent de la pluralité de dispositifs d'éclairage (113, 231, 233, 235, 264, 282, 338, 350, 352, 354).

2. Système agricole (100) selon la revendication 1, l'ensemble d'outils venant en prise avec le sol (112, 230, 240, 242, 278) étant groupé en groupes et un sous-ensemble différent de la pluralité de dispositifs d'éclairage (350, 352, 354) étant conçu pour éclairer l'interface outil-sol d'un groupe différent d'outils venant en prise avec le sol (112, 230, 240, 242, 278).

3. Système agricole (100) selon la revendication 2, chaque sous-ensemble différent de la pluralité de dispositifs d'éclairage (113, 231, 233, 235, 264, 282, 338, 350, 352, 354) pouvant être commandé indépendamment d'autres sous-ensembles de la pluralité de dispositifs d'éclairage (113, 231, 233, 235, 264, 282, 338, 350, 352, 354) en fonction de l'entrée opérateur.

4. Système agricole (100) selon la revendication 1 et comprenant en outre un commutateur manuel (99, 266, 268, 270, 342) accouplé au châssis (106, 107, 108, 110, 111, 210) et conçu pour commander le dispositif d'éclairage (113, 231, 233, 235, 264, 282, 338, 350, 352, 354) en fonction d'une entrée manuelle.

5. Système agricole (100) selon l'une des revendications 1 à 4, et comprenant en outre une alimentation électrique (336) montée sur l'instrument (101, 204, 250, 270, 300) et conçue pour alimenter la pluralité de dispositifs d'éclairage (113, 231, 233, 235, 264, 282, 338, 350, 352, 354).

6. Système agricole (100) selon l'une des revendications 1 à 5, comprenant en outre :
le véhicule tracteur (10) comprenant un compartiment opérateur (103) et le mécanisme d'interface opérateur (254, 310) dans le compartiment opérateur (103) ;
la liaison de communication (302) accouplée au véhicule tracteur (10) et à l'instrument agricole tracté (101, 204, 250, 270, 300) et conçue pour recevoir des signaux de commande de dispositif d'éclairage provenant du véhicule tracteur (10) pour commander un état du dispositif d'éclairage en fonction d'une entrée opérateur par le biais du mécanisme d'interface opérateur (254, 310).
